# EUROPÄISCHE PATENTSCHRIFT

(11) **EP 0 780 685 B1**
(45) Veröffentlichungstag und Bekanntmachung des Hinweises auf die Patenterteilung: **01.03.2000**
(21) Anmeldenummer: 96119398.4
(22) Anmeldetag: 04.12.1996
(51) Int. Cl.: G01N 27/49

(54) **Amperometrischer Zweielektrodensensor.**
Amperometric sensor with two electrodes.
Capteur ampérométrique à deux électrodes.

(30) Priorität: 20.12.1995 DE 19547670
(43) Veröffentlichungstag der Anmeldung: 25.06.1997
(73) Patentinhaber: ProMinent Dosiertechnik GmbH, 69123 Heidelberg (DE)
(72) Erfinder: Pinkowski, Alexander, Dr., 64757 Rothenberg (DE)
(74) Vertreter: Knoblauch, Andreas, Dr.-Ing.

(56) Entgegenhaltungen:
- CH-A- 686 980
- DE-A- 2 327 825
- FR-A- 2 692 675
- US-A- 4 187 162
- JOURNAL OF CHROMATOGRAPHY, Bd. 457, 1988, AMSTERDAM, NL, Seiten 398-402, XP000647166 HEPING WANG: "DETERMINATION OF ETHYLENETHIOUREA IN BEVERAGES WITHOUT SAMPLE PRETREATMENT USING HIGH-PERFORMANCE LIQUID CHROMATOGRAPHY AND AMPEROMETRIC DETECTION ON A COPPER ELECTRODE"
- ANALYTICA CHIMICA ACTA, Bd. 142, 1982, AMSTERDAM, NL, Seiten 31-45, XP000646194 W. TH. KOK: "AMPEROMETRIC DETECTION OF AMINO ACIDS WITH A PASSIVATED COPPER ELECTRODE"

## Beschreibung

Die Erfindung betrifft einen amperometrischen Zweielektrodensensor mit einer Arbeitselektrode sowie einer Referenz- und Gegenelektrode in einem Bauteil.

Amperometrische Sensoren sind in Drei- und Zweielektrodenausführungen bekannt. Bei der Dreielektrodenausführung enthalten solche Sensoren eine Arbeitselektrode, eine Referenzelektrode und eine Gegenelektrode. Bei der Zweielektrodenausführung werden die Funktionen von Referenz- und Gegenelektrode von einer einzigen Elektrode übernommen.

Zur Messung wird bei der Dreielektrodenanordnung ein Arbeitspotential im allgemeinen mittels einer potentiostatischen Schaltung zwischen Arbeits- und Referenzelektrode angelegt und der amperometrische Meßstrom, der der Konzentration des Analyten proportional ist, zwischen Arbeits- und Gegenelektrode gemessen. In diesem Fall wird die Referenzelektrode nicht vom Meßstrom durchflossen. Das Potential dieser Referenzelektrode wird also durch den Meßstrom nicht beeinflußt.

Bei einer Zweielektrodenausführung des Sensors wird als Arbeitselektrode beispielsweise eine Edelmetallelektrode aus Gold oder Platin verwendet. Die andere Elektrode, die die Funktion von Gegenelektrode und Referenzelektrode übernimmt, ist vielfach als Silber/Silberchlorid-Elektrode ausgebildet. Hierbei wird die Gegenelektrode vom Meßstrom durchflossen. Voraussetzung für eine zuverlässige Messung ist hierbei also, daß diese Elektrode trotz des amperometrischen Stromflusses ein konstantes Potential behält, auf das mit Hilfe einer potentiostatischen Schaltung das Arbeitspotential der Arbeitselektrode bezogen werden kann.

Dies wird durch zwei Maßnahmen realisiert. Zum einen ist der Silberchloridvorrat auf der Silberelektrode so groß, daß die Silberelektrode auch im stromdurchflossenen Zustand immer mit Silberchlorid bedeckt ist. Zum anderen steht diese Silber/Silberchlorid-Elektrode mit einem inneren Elektrolyten in Kontakt, der eine konstante Chloridionenaktivität besitzt. Letzteres ist z.B. der Fall, wenn eine KCl-Lösung bestimmter Konzentration (z.B. Drei-Molar) als Innenelektrolyt verwendet wird. Solche Elektroden werden als Elektroden zweiter Art bezeichnet. Der innere Elektrolytraum wird gegenüber dem Meßmedium abgeschirmt, beispielsweise durch eine für den Analyten durchlässige Membran.

Wasserstoffperoxidsensoren nach dem Dreielektrodenprinzip sind in der Literatur vielfach beschrieben worden. Dabei wird als Arbeitselektrode oft eine Edelmetallelektrode, als Referenzelektrode das bekannte Silber/Silberchlorid-System und als Gegenelektrode eine weitere Edelmetallelektrode verwendet. Die Funktion der Gegenelektrode kann auch durch Nichtedelmetallelektroden wie beispielsweise Edelstahl übernommen werden. Solche Anordnungen benötigen keinen Innenelektrolyten. Das Meßmedium selbst kann bei ausreichender Leitfähigkeit die ionenleitende Verbindung zwischen der Arbeits- und Gegenelektrode darstellen. Eine Membran ist für die Funktion solcher Anordnungen ebenfalls nicht erforderlich. Allerdings sind drei Elektroden mit der erforderlichen Beschaltung und den erforderlichen Anschlüssen notwendig.

Prinzipiell lassen sich solche Wasserstoffperoxidsensoren auch nach einem Zweielektrodenprinzip realisieren, wenn als Gegen- und gleichzeitige Referenzelektrode eine sogenannte Elektrode zweiter Art, beispielsweise Silber/Silberchlorid 3m KCl, verwendet wird. In diesem Fall ist allerdings ein abgeschlossener Referenzelektrolytraum erforderlich, der zur Verhinderung einer schnellen Vermischung des Innenelektrolyten mit dem Meßmedium durch eine geeignete Membran begrenzt werden muß.

Dreielektrodenanordnungen, die für technische Anwendungen oft einen Transducer enthalten, der das von der Sensoranordnung kommende Originalstromsignal in ein Standardsignal (z.B. live-zero-Signal 4-20 mA) umwandelt, sind naturgemäß an den drei erforderlichen elektrischen Anschlüssen anfällig gegen Kontaktkorrosion durch das Meßmedium oder die umgebende Atmosphäre. Prinzipiell können natürlich alle drei Elektroden mögliche Ausfallstellen einer solchen Sensoranordnung sein.

Bei einer Zweielektrodenanordnung sind zwar weniger Anschlüsse und weniger Elektroden vorhanden. Dieser Vorteil wird jedoch dadurch wieder zunichte gemacht, daß ein innerer Elektrolyt und eine Membran vorhanden sein müssen, die andere grundsätzliche Störmöglichkeiten zur Folge haben, wie Leckage des Elektrolytraumes und mögliche Gasblasenansammlungen zwischen Membran und Arbeitselektrode. Letzteres führt zu einer Verringerung der wirksamen Arbeitselektrodenoberfläche und erfordert eine Nachkalibrierung oder einen Wechsel von Membran und Innenelektrolyt.

DE-A-23 27 825 zeigt einen Zwei-Elektrodensensor mit einem inneren Elektrolyten. Die als Kathode verwendeten Oxide und/oder Mischoxide verbrauchen sich und müssen deshalb für die gesamte vorgesehene Betriebsdauer in der Zelle deponiert werden.

Der Erfindung liegt die Aufgabe zugrunde, einen Zwei-elektrodensensor so auszubilden, daß er ohne Innenelektrolyten und ohne eine der bekannten Elektrode zweiter Art auskommt.

Diese Aufgabe wird bei einem amperometrischen Zweielektrodensensor der eingangs genannten Art dadurch gelöst, daß die Gegenelektrode als passivierte Metallelektrode ausgebildet ist und der Sensor ohne inneren Elektrolyten und ohne Elektrode der zweiten Art ausgebildet ist.

Diese Sensoranordnung kann nun mit und ohne Membran betrieben werden. Im Falle der membranbedeckten Version dient die Membran lediglich dazu, die Arbeitselektrode vor eventuellen V rschmutzungen durch das Meßwasser zu schützen und das ampercmetrische Meßsignal durch die Diffusionsbehinderung des Anilyten in den Poren der Membran weitgehend strömungsunabhängig zu machen. Durch die Passivierung der Gegenelektrode erhält die Gegenelektrode eine Metalloberfläche, die durch e n stark verringertes Reaktionsvermögen in einem gegebenen Medium gekennzeichnet ist.

Die Ursachen dafür, daß man bei Verwendung einer passivierten Metallelektrode als Gegenelektrode mit zwei Elektroden auskommt, ohne einen Innenelektrolyten oder eine Elektrode zweiter Art zu benötigen, sind nicht völlig klar. Es kann aber vermutet werden, daß die passivierte Gegenelektrode ein so stabiles Potential besitzt, daß dieses trotz eines geringen Stromflusses als konstantes Referenzelektrodenpotential verwendet werden kann. Die Gegenelektrode wird also trotz des Flusses des Meßstroms nicht oder zumindest nicht nennenswert polarisiert. Ferner kann vermutet werden, daß das sich an der Phasengrenze zwischen passivierter Gegenelektrode und Meßwasser ausbildende Potential in seinen Eigenschaften dem Potential einer Elektrode zweiter Art, d.h. den Eigenschaften einer typischen Referenzelektrode, ähnlich ist. Es ist also nachvollziehbar, daß eine stromdurchflossene Gegenelektrode aus einem passivierten Metall ähnlich wie herkömmliche Elektroden zweiter Art auch ohne eigenen inneren Referenzelektrolyten in der Praxis als Referenzelektrode dienen kann.

Hierbei ist bevorzugt, daß die Gegenelektrode aus Edelstahl gebildet ist. Verwendbar ist beispielsweise der Stahl 1.4571. Im Gegensatz zu den ansonsten verwendeten Edelmetallen ist Edelstahl preisgünstig. Edelstahl läßt sich verhältnismäßig gut passivieren, so daß man auf diese Weise einen preisgünstig herzustellenden amperometrischen Zweielektrodensensor erhalten kann.

Vorzugsweise ist die Gegenelektrode oxidiert. Dies ist eine relativ einfache Möglichkeit, eine passivierte Gegenelektrode zu erhalten.

Mit Vorteil weist die Gegenelektrode eine aktive Fläche auf, die mindestens zehnmal größer als die der Arbeitselektrode ist. Die genauen Größenverhältnisse lassen sich aber leicht anhand der Maßgabe abschätzen, daß die Stromdichte so klein gehalten werden soll, daß die Stromdichte an der Oberfläche der Gegenelektrode nicht zu einer das Meßergebnis verfälschenden Polarisierung dieser Gegenelektrode führt. Typische Werte für das Flächenverhältnis liegen im Bereich von mehreren Hundert bis mehr als Tausend zu eins.

Auch ist bevorzugt, daß die Gegenelektrode als Rohr ausgebildet ist, in dessen Innern die Arbeitselektrode angeordnet ist, wobei die Arbeitselektrode durch eine Isolationsschicht, die die Arbeitselektrode in Längsrichtung abdeckt, von der Gegenelektrode getrennt ist. Hierbei erreicht man zwei Vorteile. Zum einen kann man auf diese Weise das gewünschte Flächenverhältnis zwischen Gegenelektrode und Arbeitselektrode sicherstellen. Die Arbeitselektrode ist in Längsrichtung durch die Isolationsschicht abgedeckt. Damit kann sie dort mit dem Meßwasser oder der Meßflüssigkeit nicht in Berührung kommen. Andererseits isoliert die Isolationsschicht natürlich auch die Arbeitselektrode und die Gegenelektrode elektrisch voneinander. Das Rohr, das die Gegenelektrode bildet, kann dann insgesamt mit seiner Oberfläche in die Meßflüssigkeit eingetaucht werden. Damit steht eine sehr große Oberfläche zur Verfügung, so daß die Stromdichte gering gehalten werden kann.

Hierbei ist von Vorteil, daß die Isolationsschicht einen Raum zwischen Arbeitselektrode und Gegenelektrode zumindest weitgehend ausfüllt, wobei die Stirnseite der Arbeitselektrode nicht bedeckt ist. Die Isolationsschicht bewirkt dann zusätzlich eine mechanische Festlegung der Arbeitselektrode innerhalb der Gegenelektrode.

Die Erfindung betrifft auch ein Verfahren zum Messen eines Analyten in einer Meßlösung, bei dem ein Zweielektrodensensor mit einer Arbeitselektrode und einer Referenz-/Gegenelekrode in eine Meßlösung getaucht, ein Arbeitspotential zwischen Arbeits- und Gegenelektrode angelegt und ein Meßstrom gemessen wird, bei dem als Gegenelektrode eine passivierte Metallelektrode verwendet wird, die direkt in die Meßlösung eingetaucht wird, und bei dem der Sensor ohne inneren Elektrolyten und ohne Elektrode zweiter Art ausgebildet ist.

Man kommt bei diesem Meßverfahren mit nur zwei Elektroden aus, nämlich der Arbeitselektrode und der Gegenelektrode, die gleichzeitig die Funktion einer Referenzelektrode übernimmt, ohne daß man einen Innenelektrolyten für die Gegenelektrode oder eine der bekannten Elektroden zweiter Art benötigt. Das Meßverfahren wird dadurch sehr einfach. Die Analytkonzentration, also die Konzentration der zu ermittelnden Spezies in der Meßflüssigkeit, kann, wie bisher auch, anhand der Größe des Meßstromes ermittelt werden. Die Messung kann im Grunde genommen ablaufen, wie bisher auch. Allerdings ist der apparative Aufwand wesentlich kleiner.

Hierbei ist besonders bevorzugt, daß die Gegenelektrode beim Eintauchen in die Meßlösung passiviert wird. Es ist also lediglich notwendig, vorab eine Gegenelektrode aus einem passivierbaren Metall bereit zu stellen. Sobald die Gegenelektrode in die Meßlösung eingetaucht wird, kann bei Verwendung von geeigneten Meßflüssigkeiten eine Oberflächenreaktion zwischen dem Metall und der Meßflüssigkeit ablaufen, so daß die gewünschte Passivierungsschicht entsteht.

Alternativ oder zusätzlich dazu kann die Passivierung durch Oxidation an Luft, chemische Oxidation in wässrigen Flüssigkeiten oder elektrochemische anodische Oxidation erreicht werden. Es handelt sich hierbei um relativ einfache Verfahren, die praktisch keinen zusätzlichen Aufwand erfordern.

Vorzugsweise wird vor dem eigentlichen Messen ein definierter physikalisch-chemischer Oberflächenzustand erzeugt, der die gewünschte Reaktion katalysiert. Damit erzielt man vor jeder Messung einen definierten Ausgangszustand, so daß die Messungen gut reproduzierbar werden.

Hierbei ist bevorzugt, daß der Oberflächenzustand durch Potentialsprungaktivierung erzeugt wird. Dieser auch als PAD-Aktivierung (Pulsed Amperometric Detection) bekannte Aktivierung besteht darin, daß vor Anlegen des eigentlichen Arbeitspotentials anodische und kathodische Potentiale angelegt werden, die auf der Arbeitselektrodenoberfläche den gewünschten definierten physikalisch-chemischen Oberflächenzustand erzeugen. Während die an sich bekannte PAD-Technik bislang nur zur Aktivierung der Arbeitselektrode verwendet wurde, dient sie im vorliegenden Fall während der Phase der kathodischen Aktivierung der Arbeitselektrode auch zur anodischen Repassivierung der Gegenelektrode. Beide Elektroden werden also damit in den gewünschten Ausgangszustand versetzt.

Die Erfindung wird im folgenden anhand eines bevorzugten Ausführungsbeispiels in Verbindung mit der Zeichnung beschrieben. Hierin zeigen:

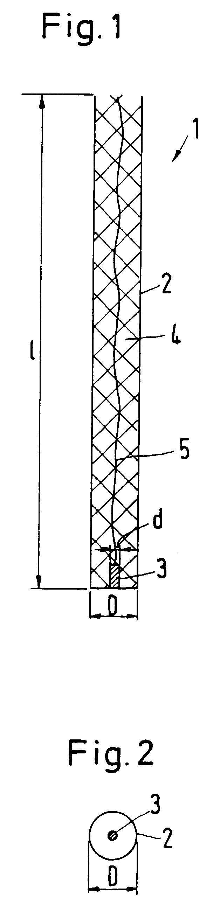

- Fig. 1: einen schematischen Querschnitt durch einen Zweielektrodensensor und
- Fig. 2: eine Draufsicht auf die Stirnseite des Sensors.

Ein Sensor 1 weist im vorliegenden Fall ein Rohr 2 aus Edelstahl (Stahl 1.4571) auf, das eine Länge 1 von etwa 120 mm und einen Außendurchmesser D von etwa 12 mm besitzt. Das Rohr 2 dient als Gegenelektrode und gleichzeitig als Referenzelektrode.

Im Innern des Rohres, vorzugsweise zentrisch, ist ein Platindraht 3 mit einem Durchmesser d von 1 bis 2 mm angeordnet. Die Länge dieses Platindrahtes 3 spielt keine nennenswerte Rolle. Das Rohr 2 ist mit einer Vergußmasse 4 gefüllt, die als Isolationsschicht zwischen dem Platindraht 3 und dem Rohr 2 wirkt, also diese beiden Teile elektrisch voneinander isoliert. Gleichzeitig hält sie den Platindraht 3 mechanisch im Innern des Rohres 2 fest. Der Platindraht 3 muß also nur eine Länge aufweisen, die groß genug ist, damit er zuverlässig in der Vergußmasse 4 festgehalten wird.

Lediglich die Stirnseite des Platindrahts 3 ist nicht von der Vergußmasse 4 bedeckt. Dies wird zweckmäßigerweise dadurch erreicht, daß der Sensor 1 an seiner Stirnseite plan, sphärisch oder konisch geschliffen wird, so daß die Vergußmasse 4, der Platindraht 3 und das Rohr 2 in der gleichen Fläche abschließen.

Der Platindraht 3 ist über eine elektrische Leitung 5 mit einer nicht näher dargestellten Auswerteeinrichtung verbunden, mit der auch das Rohr 2 elektrisch verbunden ist.

Der Platindraht 3 dient im vorliegenden Fall als Arbeitselektrode. Das Rohr 2 dient, wie gesagt, als Gegen- und Referenzelektrode.

Wichtig ist hierbei, daß das Rohr 2 eine passivierbare Oberfläche aufweist und daß diese Oberfläche vor dem Durchführen der eigentlichen Messung passiviert wird.

Die Passivierung kann durch eine Oxidation erfolgen, beispielsweise durch Oxidation an Luft, durch chemische Oxidation in wässrigen Flüssigkeiten oder durch elektrochemische anodische Oxidation.

Bei der Ermittlung von Wasserstoffperoxid in Wasser erfolgt bei Verwendung von Edelstahl als Gegenelektrode die Bildung einer oxidativen Passivschicht auf der Oberfläche chemisch durch die Oxidationswirkung des in der Meßflüssigkeit enthaltenen Wasserstoffperoxids. In vielen Fällen erfolgt sie aber auch schon durch Kontakt mit Wasser. Damit wird die Passivierung der Gegenelektrode beim Eintauchen des Sensors in die Meßflüssigkeit in situ erzeugt.

Aufgrund der Flächenverhältnisse zwischen der Arbeitselektrode (Stirnseite des Platindrahts) und der Gegenelektrode (Umfangsfläche des Rohrs 2) ist die Stromdichte an der Gegenelektrode sehr gering. Im Zusammenwirken mit der Passivierung ergibt sich dadurch praktisch keine Polarisierung der Gegenelektrode, so daß das Referenzpotential weitgehend unverändert erhalten bleibt. Es verschiebt sich zumindest nicht soweit, daß die Messung in irgendeiner Art und Weise negativ beeinflußt wird. Bei einem Durchmesser der Arbeitselektrode von 2 mm ergibt sich ein Flächenverhältnis Gegenelektrode:Arbeitselektrode von etwa 360:1, bei einem Durchmesser von 1 mm ist das Verhältnis etwa 1440:1. Da erfahrungsgemäß typische Sensorempfindlichkeiten amperometrischer Sensoren (die sogenannte Steilheit des Sensors) bei einem Sensor mit einem Arbeitselektrodendurchmesser von 1 mm in der Größenordnung von nA/ppm liegen, entspricht das bei niedrigen Analytkonzentrationen in der Nähe von 1 ppm einer Stromdichte (also Stromstärke pro Flächeneinheit) an der Arbeitselektrode von < 10 nA/cm². Die entsprechende Stromdichte an einer tausendfach größeren Gegenelektrode wäre dann also < 10 pA/cm². Bei derartig niedrigen Stromdichten an der Gegenelektrode ist die gemachte Annahme gerechtfertigt, daß der amperometrische Stromfluß die Gegenelektrode praktisch nicht polarisiert.

Für die Langzeitstabilität eines solchen Sensors hat es sich als vorteilhaft herausgestellt, daß die als PAD (Pulsed Amperemetric Detection) bekannte Potentialsprungaktivierung argewandt wird.

Die PAD-Aktivierung besteht darin, daß vor Anlegen des eigentlichen Arbeitspotentials anodische und kathodische Potentiale angelegt werden, die auf der Arbeitselektrodenoberfläche, d.h. auf der Stirnseite des Platindrahts 3, einen definierten physikalisch-chemischen Oberflächenzustand erzeugen, der die gewünschte Reaktion, beispielsweise mit Wasserstoffperoxid, katalysiert. Während der Phase der kathodischen Aktivierung der Arbeitselektrode wird gleichzeitig die anodische Repassivierung der Gegenelektrode bewirkt, so daß man immer die gewünschte passivierte Metallelektrode als Gegenelektrode bei der Messung verwendet.

Typische Aktivierungspotentiale für einen H₂O₂-Sensor der genannten Ausführungsform mit Platin-Arbeitselektrode und Edelstahl-Gegenelektrode sind z.B. eine kathodische reduktive Reinigungsphase der Arbeitselektrode bei ca. 0 ± 50 mV und anschließend eine anodische oxydative Belegung der Arbeitselektrodenfläche bei ca. + 1100 ± 100 mV. Die genannten Potentiale beziehen sich auf das Potential der Arbeitselektrode gegenüber der Gegenelektrode. Da die amperometrische Umsetzung des H₂O₂ bevorzugt an der oxidbedeckten Arbeitselektrode abläuft, ist die Reihenfolge der Aktivierungspotentiale so auszulegen, wie oben beschrieben, d.h., zuerst reduktive Reinigung, dann oxydative Belegung, dann Messung. Bevorzugte Zeitverhältnisse für die beiden genannten Aktivierungsschritte sind z.B. Reduktion zu Oxidation wie 2:1 bis 10:1.

## Patentansprüche

1. Amperometrischer Zweielektrodensensor mit einer Arbeitselektrode sowie einer Referenz- und Gegenelektrode in einem Bauteil, dadurch gekennzeichnet, daß die Gegenelektrode (2), die auch als Referenzelektrode dient, als passivierte Metallelektrode ausgebildet ist und der Sensor ohne inneren Elektrolyten und ohne Elektrode der zweiten Art ausgebildet ist.

2. Sensor nach Anspruch 1, dadurch gekennzeichnet, daß die Gegenelektrode (2) aus Edelstahl gebildet ist.

3. Sensor nach Anspruch 1 oder 2, dadurch gekennzeichnet, daß die Gegenelektrode (2) oxidiert ist.

4. Sensor nach einem der Ansprüche 1 bis 3, dadurch gekennzeichnet, daß die Gegenelektrode (2) eine aktive Fläche aufweist, die mindestens um den Faktor 10 größer als die der Arbeitselektrode (3) ist.

5. Sensor nach einem der Ansprüche 1 bis 4, dadurch gekennzeichnet, daß die Gegenelektrode (2) als Rohr ausgebildet ist, in dessen Innern die Arbeitselektrode (3) angeordnet ist, wobei die Arbeitselektrode (3) durch eine Isolationsschicht (4), die die Arbeitselektrode (3) in Längsrichtung abdeckt, von der Gegenelektrode (2) getrennt ist.

6. Sensor nach Anspruch 5, dadurch gekennzeichnet, daß die Isolationsschicht (4) einen Raum zwischen Arbeitselektrode (3) und Gegenelektrode (2) zumindest weitgehend ausfüllt, wobei die Stirnseite der Arbeitselektrode (3) nicht bedeckt ist.

7. Verfahren zum Messen eines Analyten in einer Meßlösung, bei dem ein Zweielektrodensensor mit einer Arbeitselektrode und einer Referenz-/Gegenelektrode in eine Meßlösung getaucht, ein Arbeitspotential zwischen Arbeits- und Gegenelektrode angelegt und ein Meßstrom gemessen wird, dadurch gekennzeichnet, daß als Gegenelektrode eine passivierte Metallelektrode verwendet wird, die direkt in die Meßlösung eingetaucht wird, und bei dem der Sensor ohne inneren Elektrolyten und ohne Elektrode der zweiten Art ausgebildet ist.

8. Verfahren nach Anspruch 7, dadurch gekennzeichnet, daß die Gegenelektrode beim Eintauchen in die Meßlösung passiviert wird.

9. Verfahren nach Anspruch 7 oder 8, dadurch gekennzeichnet, daß die Passivierung durch Oxidation an Luft, chemische Oxidation in wässrigen Flüssigkeiten oder elektrochemische anodische Oxidation erreicht wird.

10. Verfahren nach einem der Ansprüche 7 bis 9, dadurch gekennzeichnet, daß vor dem eigentlichen Messen ein definierter physikalisch-chemischer Oberflächenzustand erzeugt wird, der die gewünschte Reaktion katalysiert.

11. Verfahren nach Anspruch 10, dadurch gekennzeichnet, daß der Oberflächenzustand durch Potentialsprungaktivierung erzeugt wird.

## Claims

1. Amperometric two-electrode sensor comprising a working electrode and a reference/counter electrode in one assembly, characterized in that the counter electrode, which also serves as reference electrode, (2), is fashioned as a passivated metal electrode and the sensor is fashioned without an internal electrolyte and without an electrode of the second type.

2. Sensor according to Claim 1, characterized in that the counter electrode (2) is made of alloy steel.

3. Sensor according to Claim 1 or 2, characterized in that the counter electrode (2) is oxidized.

4. Sensor according to any one of Claims 1 to 3, characterized in that the counter electrode (2) has an active surface which is larger than that of the working electrode (3) by at least a factor of 10.

5. Sensor according to any one of Claims 1 to 4, characterized in that the counter electrode (2) is configured as a tube in whose interior the working electrode (3) is disposed, the working electrode (3) being separated from the counter electrode (2) by an insulating layer (4) which covers the working electrode (3) in the longitudinal direction.

6. Sensor according to Claim 5, characterized in that the insulating layer (4) at least largely fills a space between working electrode (3) and counter electrode (2), the front face of the working electrode (3) not being covered.

7. Method of measuring an analyte in a test solution, which method involves immersing a two-electrode sensor comprising a working electrode and a reference/counter electrode in a test solution, applying a working potential between working and counter electrode and measuring a measured current, characterized in that the counter electrode used is a passivated metal electrode which is immersed directly in the test solution, the sensor used being fashioned without an internal electrolyte and without any electrode of the second type.

8. Method according to Claim 7, characterized in that the counter electrode is passivated when immersed in the test solution.

9. Method according to Claim 7 or 8, characterized in that the passivation is achieved by oxidation in air, chemical oxidation in aqueous liquids or electrochemical anodic oxidation.

10. Method according to any one of Claims 7 to 9, characterized in that the measurement proper is preceded by a defined physicochemical surface state being established which catalyses the desired reaction.

11. Method according to Claim 10, characterized in that the surface state is established by potential jump activation.

## Revendications

1. Capteur ampérométrique à deux électrodes, présentant une électrode de travail ainsi qu'une contre-électrode de référence en un composant, caractérisé en ce que la contre-électrode (2), qui sert également d'électrode de référence, est configurée comme électrode en métal passivé, et le capteur est configuré sans électrolyte interne et sans électrode du deuxième type.

2. Capteur selon la revendication 1, caractérisé en ce que la contre-électrode (2) est formée d'acier allié.

3. Capteur selon la revendication 1 ou 2, caractérisé en ce que la contre-électrode (2) est oxydée.

4. Capteur selon l'une des revendications 1 à 3, caractérisé en ce que la surface active de la contre-électrode (2) est plus grande que celle de l'électrode de travail (3) d'au moins un facteur 10.

5. Capteur selon l'une des revendications 1 à 4, caractérisé en ce que la contre-électrode (2) est configurée comme tube à l'intérieur duquel est disposée l'électrode de travail (3), l'électrode de travail (3) étant séparée de la contre-électrode (2) par une couche d'isolation (4) qui recouvre l'électrode de travail (3) dans la direction longitudinale.

6. Capteur selon la revendication 5, caractérisé en ce que la couche d'isolation (4) remplit un espace situé entre l'électrode de travail (3) et la contre-électrode (2) au moins suffisamment pour que le coté frontal de l'électrode de travail (3) ne soit pas recouvert.

7. Procédé pour la mesure d'un analyte dans une solution de mesure, dans lequel un capteur à deux électrodes présentant une électrode de travail et une contre-électrode de référence est immergé dans une solution de mesure, un potentiel de travail est appliqué entre l'électrode de travail et la contre-électrode et un courant de mesure est mesuré, caractérisé en ce que l'on utilise comme contre-électrode une électrode en métal passivé qui est immergée directement dans la solution de mesure, le capteur étant configuré sans électrolyte interne et sans électrode du deuxième type.

8. Procédé selon la revendication 7, caractérisé en ce que la contre-électrode est passivée lors de son immersion dans la solution de mesure.

9. Procédé selon la revendication 7 ou 8, caractérisé en ce que la passivation est obtenue par oxydation par l'air, oxydation chimique dans des liquides aqueux ou oxydation électrochimique anodique.

10. Procédé selon l'une des revendications 7 à 9, caractérisé en ce qu'avant la mesure proprement dite, on crée à la surface un état physicochimique défini qui catalyse la réaction souhaitée.

11. Procédé selon la revendication 10, caractérisé en ce que l'état de surface est créé par activation brusque du potentiel.
